# EUROPÄISCHE PATENTSCHRIFT

(11) **EP 2 798 418 B1**
(45) Veröffentlichungstag und Bekanntmachung des Hinweises auf die Patenterteilung: **28.09.2016**
(21) Anmeldenummer: 12716281.6
(22) Anmeldetag: 28.03.2012
(51) Int. Cl.: G05B 19/418

(54) **VORRICHTUNG UND VERFAHREN ZUR AUTOMATISCHEN ERSTELLUNG VON EINSCHALT-SEQUENZEN IN EINER ANLAGE**
DEVICE AND METHOD FOR THE AUTOMATIC GENERATION OF POWER-UP SEQUENCES IN AN INSTALLATION
DISPOSITIF ET PROCÉDÉ DE CONSTITUTION AUTOMATIQUE DE SÉQUENCES DE MISE EN FONCTIONNEMENT DANS UNE INSTALLATION

(43) Veröffentlichungstag der Anmeldung: 05.11.2014
(73) Patentinhaber: Siemens Aktiengesellschaft, 80333 München (DE)
(72) Erfinder: FÖRTSCH, Rainer, 91077 Kleinsendelbach (DE); GRAF, Rene, 90513 Zirndorf (DE); KONOPKA, Frank, 90518 Altdorf (DE); PESCHKE, Jörn, 90489 Nürnberg (DE)
(86) Internationale Anmeldenummer: PCT/EP2012/055491
(87) Internationale Veröffentlichungsnummer: WO 2013/143584

(56) Entgegenhaltungen:
- EP-A2- 2 172 887
- WO-A1-2009/138347
- WO-A2-2008/039759
- DE-A1-102008 040 440
- JP-A- 2001 356 814

## Beschreibung

Industrielle Anlagen, auch Automatisierungsanlagen genannt, werden zur automatisierten Herstellung von Produkten und zur automatisierten Durchführung von Prozessen verwendet. Sie setzen sich, abhängig von den Anforderungen an die Anlage, aus sehr vielen kleinen und großen Komponenten zusammen. In diesen Komponenten werden die unterschiedlichsten Funktionalitäten, beispielsweise das Messen, Steuern, Regeln, die Bedienung der Komponenten über Schnittstellen und die Kommunikation zwischen den Komponenten und den Schnittstellen realisiert. Bei den Komponenten kann es sich um einzelne Maschinen, Fördereinheiten oder ganze Fertigungszellen mit innerer Struktur handeln. Zwischen diesen Komponenten bestehen auch Abhängigkeiten, die beispielsweise vorschreiben, dass eine bestimmte Komponente erst ein- oder abgeschaltet werden kann, wenn eine oder mehrere andere Komponenten sich in einem definierten Zustand befinden.

Das Hoch- oder Runterfahren einer solchen komplexen Anlage ist ein Prozess, der sich zum einen über einen langen Zeitraum erstreckt als auch manuell erfolgt, weil das Zusammenspiel der Komponenten zu komplex ist, um eine Ablaufsequenz explizit zu programmieren.

Diese Umstände haben zur Folge, dass in Stillstandszeiten dieser Anlage die einzelnen Komponenten zwar nichts produzieren, aber dennoch in betriebsbereitem Zustand sind, so dass nach wie vor ein erheblicher Energieverbrauch anfällt. Untersuchungen bei Automobilproduzenten haben gezeigt, dass der Energieverbrauch einer nicht produzierenden Anlage bis zu 60% gegenüber einer Anlage im produzierenden Betrieb liegt. Hier gibt es ein sehr großes Einsparpotential.

Darüber hinaus ist meist nicht bekannt, welche Komponenten in welchen Zuständen wie viel Energie verbrauchen und welche Zeiten für Zustandswechsel benötigt werden. Damit fehlt also die Voraussetzung, um beurteilen zu können, ob es sinnvoll ist bestimmte Teile der Anlage, z. B. während kurzer Pausen, abzuschalten.

Auch ein Schalten in energiesparende Zustände, z. B. Standby, wird heute nicht vorgenommen, da solche Zustände in der Anlage nicht vorgesehen und implementiert sind. Darüber hinaus würde auch ein Schalten in solche Zustände die Kenntnis über die Abhängigkeiten in der Anlage erfordern.

### Stand der Technik

Die Inbetriebnahme einer Anlage erfolgt manuell durch erfahrenes Personal. Das Ausschalten und Einschalten von Produktionsanlagen nach der ersten Inbetriebnahme wird heute meist unterlassen, da für die manuelle Durchführung der Schaltvorgänge der einzelnen Komponenten besonderes Personal mit sehr detailliertem Wissen über die Abhängigkeiten der unterschiedlichen Komponenten untereinander und wie diese zu synchronisieren sind, notwendig ist. Wenn überhaupt, werden Anlagen nur in zu langen Nichtproduktivzeiten, zum Beispiel in Werksferien abgeschaltet. Das Wiedereinschalten der Anlage dauert dann teilweise viele Stunden und kann nur von einigen wenigen Personen durchgeführt werden.

In einer anderen Anmeldung wird eine Vorrichtung zur Steuerung einer Anlage oder einen Teil einer Anlage, bestehend aus Anlagenkomponenten vorgeschlagen. Die Steuerung verwendet dabei ein Strukturmodell der Anlage sowie Zustandsmodelle der in der Anlage enthaltenen Komponenten. Die verwendeten Modelle umfassen auch Informationen zu möglichen Zuständen, welche die Anlagen-Komponenten einnehmen können und zur jeweiligen Energieaufnahme der Komponenten in dem jeweiligen Zustand. Zusammen mit weiteren Informationen zu logischen Abhängigkeiten zwischen den einzelnen Komponenten in den jeweiligen energetischen Zuständen. Unter logischen Abhängigkeiten wird dabei im Folgenden verstanden, dass ein Schaltvorgang zumindest einer Anlagen-Komponente weitere Zustände anderer Anlagen-Komponenten voraussetzt, um eine Anlage oder einen Anlagenteil geordnet zu steuern.

Durch die Kenntnis der Abhängigkeiten zwischen den Komponenten der Anlage ist es der Vorrichtung (dem Energieschaltcontroller) möglich, jede Komponente in ihre verschiedenen Zustände zu schalten. Damit kann auch die Anlage in vordefinierte Gesamtzustände (setzen sich zusammen aus Kombinationen der Zustände der Komponenten) geschaltet werden. Hiermit kann nicht nur die Anlage automatisch ein- und ausgeschaltet werden, sondern es können auch definierte energiesparende Zustände im Nichtproduktivbetrieb, sogenannte Standby-Zustände, sowie energiesparende Zustände im Produktivbetrieb, z.B. Teillastbetrieb, angefahren werden.

Das Dokument WO 2008/039759 A2 betrifft eine Vorrichtung und ein Verfahren für Ressource Management (Insbesondere den Stromverbrauch) eines Systems, insbesondere einer Anlage. Die Anlage besteht aus verschiedenen Komponenten, welche ggf. in Beziehungen untereinander stehen, insbesondere eine logische Reihenfolge , in der Sequenz eines Produktionsprozesses.

Es ist nun Aufgabe der Erfindung, ein Verfahren und eine Vorrichtung anzugeben, mit deren Hilfe eine Anlage möglichst energieeffizient in einen aktiven Produktivbetrieb geschaltet werden kann.

Die Aufgabe wird gelöst durch ein Verfahren gemäß Patentanspruch 1 und eine Vorrichtung gemäß Patentanspruch 4 .

Durch das erfindungsgemäße Verfahren wird eine Ein- oder Ausschalt-Reihenfolge für Anlagen-Komponenten in einer industriellen Anlage erstellt, wobei jede der Anlagen-Komponenten logische Abhängigkeiten zu einer oder mehreren anderen Anlagen-Komponenten aufweisen kann, und bei dem diese Abhängigkeiten bei der Einschalt-Reihenfolge zu beachten sind, und zu jeder Anlagen-Komponente Informationen über eine komponentenspezifische Energieaufnahmeverlauf während des Zeitraums des Einschalt-Vorgangs bekannt sind und während des Einschaltvorgangs die Gesamt-Energieaufnahme in der industriellen Anlage immer unterhalb eines zuvor festgelegten Energie-Schwellwerts bleibt

Die erfindungsgemäße Vorrichtung zur Erstellung einer Ein- oder Ausschalt-Reihenfolge von Anlagen-Komponenten in einer industriellen Anlage, bei dem jede der Anlagen-Komponenten logische Abhängigkeiten zu einer oder mehreren anderen Anlagen-Komponenten aufweisen kann, und bei dem diese Abhängigkeiten bei der Einschalt-Reihenfolge zu beachten sind, wobei zu jeder Anlagen-Komponente Informationen über eine komponentenspezifische Energieaufnahmeverlauf während des Zeitraums des Einschalt-Vorgangs bekannt sind und stellt sicher, dass durch die geeignete gewählte Reihenfolge während des ermittelten Ein- oder Ausschaltvorgangs die Gesamt-Energieaufnahme in der industriellen Anlage immer unterhalb eines zuvor festgelegten Energie-Schwellwerts bleibt

Weitere vorteilhafte Ausführungsformen sind in den Unteransprüchen angegeben.

Der zeitliche Verlauf des Energieverbrauchs beim Einschalten einer Komponente kann sehr unterschiedlich sein, je nachdem um welche Art(en) von Verbrauchern es sich handelt. Bei manchen Komponenten (z. B. Maschinen oder ganzen Fertigungszellen) kann der Lastverlauf unter Umständen sehr komplex werden. Beim Einschalten können auch mehrere Lastspitzen auftreten. Werden unterschiedliche Komponenten gleichzeitig eingeschaltet so kann es zu einer unerwünschten Addition von Lastspitzen kommen die erlaubte Grenzwerte überschreiten und z. B. Sicherungen in der Anlage auslösen.

Da der genaue zeitliche Verlauf des Energieverbrauchs von Komponenten in einer Anlage weitgehend unbekannt ist werden die Komponenten mit einem großen zeitlichen Sicherheitsabstand nacheinander gestartet. Damit ergeben sich sehr große Hochfahrzeiten für eine Anlage.

Der automatisch ermittelte Gesamtenergieverbrauch ermöglicht es die Einschalt- oder Ausschaltsequenz zeitlich zu verkürzen, ohne die geforderten Randbedingungen wie Abhängigkeiten oder maximal zulässiger Energieverbrauch zu verletzen.

Die Energieverlaufskurven der jeweiligen Komponenten (Profile) können durch den Zulieferer einer Komponente bestimmt werden oder müssen in der Anlage selbst gemessen werden.

Der Vorteil dieser Steuerung der Schaltreihenfolge ist eine zeitlich optimierte Sequenz, um eine Anlage oder auch einen Teil davon ein- bzw. auszuschalten. Auf Basis dieser Daten kann z. B. ein übergeordnetes Energiemanagement-System in Stillstandzeiten entscheiden, ob das Herunterfahren der Anlage oder Teilen davon möglich ist, um am Ende der Zeit wieder eine vollständig betriebsbereite Anlage zu haben.

Die vorliegende Erfindung wird nun anhand der beigefügten Figuren näher erläutert:
- Figur 1: eine erste Lastverlauf beim Einschalten einer Anlage
- Figur 2: eine zweite Lastverlauf beim Einschalten einer Anlage gemäß des erfindungsgemäßen Verfahrens
- FIG 3: eine Übersicht über einen übergeordnetes Energiemanagementsystem mit Schnittstellen,
- FIG 4: ein System mit Teilanlage.

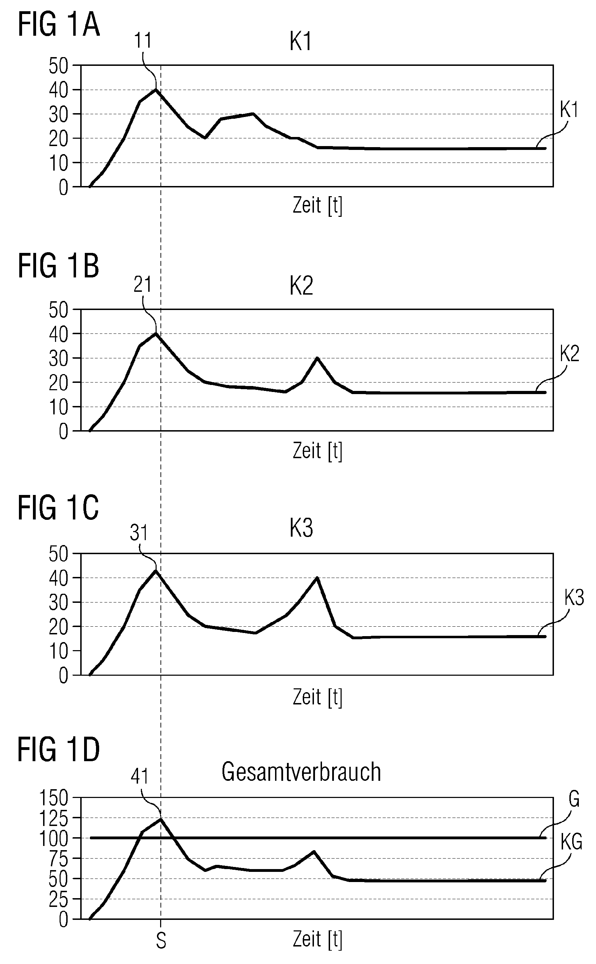

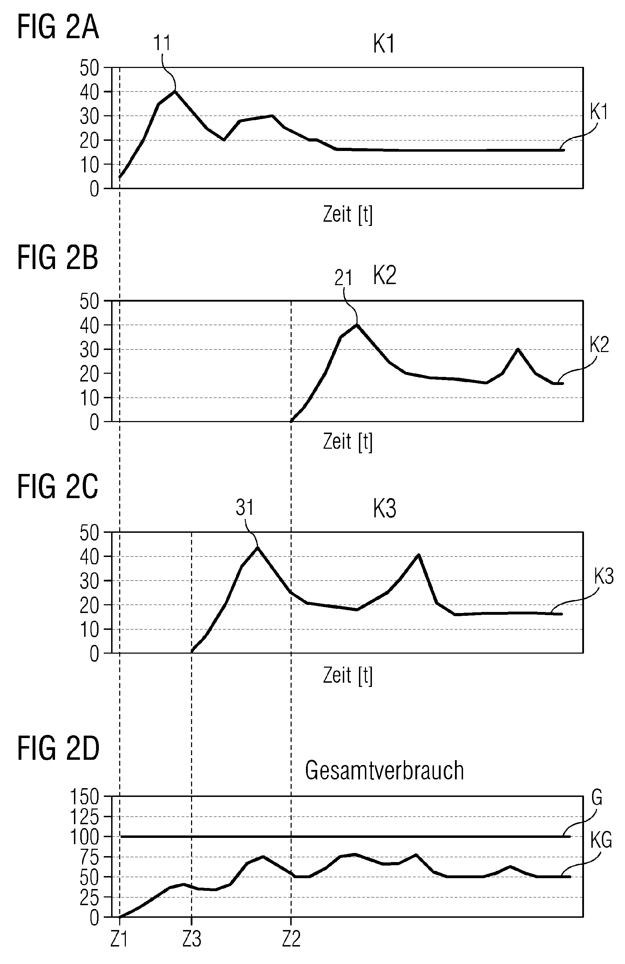

Die nachfolgenden Figuren 1 und 2 zeigen beispielhaft die Energieaufnahme von drei verschiedenen Komponenten einer Anlage. Es ist zu sehen, dass beim Anlauf der Komponenten K1, K2, K3 (z. B. eine Fertigungszelle) eine oder mehrere Verbrauchsspitzen 11, 21, 31 auftreten. Werden die drei Komponenten gleichzeitig gestartet so ist in den Diagrammen der Figur 1 deutlich zu sehen, dass im Gesamtverbrauch KG zum Zeitpunkt S ein Spitzenwert entsteht der den zulässigen Grenzwert G um ca. 25% überschreitet.

Nun wird der zeitliche Verlauf der Energieaufnahme der Komponenten analysiert und über eine berechnete und zeitlich optimierte Schaltsequenz für die Komponenten unter Berücksichtigung der logischen und zeitlichen Abhängigkeiten der einzelnen zu steuernden Komponenten K1, K2, K3 sichergestellt, dass der Grenzwert nicht überschritten wird und in diesem Beispiel eine Sicherheit von ca. 25% eingehalten wird. Dafür werden gemäß den Diagrammen der Figur 2 die Komponenten nicht alle gleichzeitig hochgefahren, sondern zeitlich versetzt zu den Zeitpunkten Z1, Z2 und Z3 gestartet. Dabei sind logische Abhängigkeiten dahingehend zu berücksichtigen, dass sichergestellt ist, dass Anlagenkomponenten, die für den fehlerfreien Betrieb von anderen Anlagenkomponenten erforderlich sind (beispielsweise Kühlungen) zuerst angeschaltet werden und bereits zur Verfügung stehen, wenn die davon abhängige Komponente in den Produktivbetrieb gefahren wird. Dies führt im dargestellten Beispiel dazu, dass die Kompnente K3 vor der Komponente K2 gestartet wird.

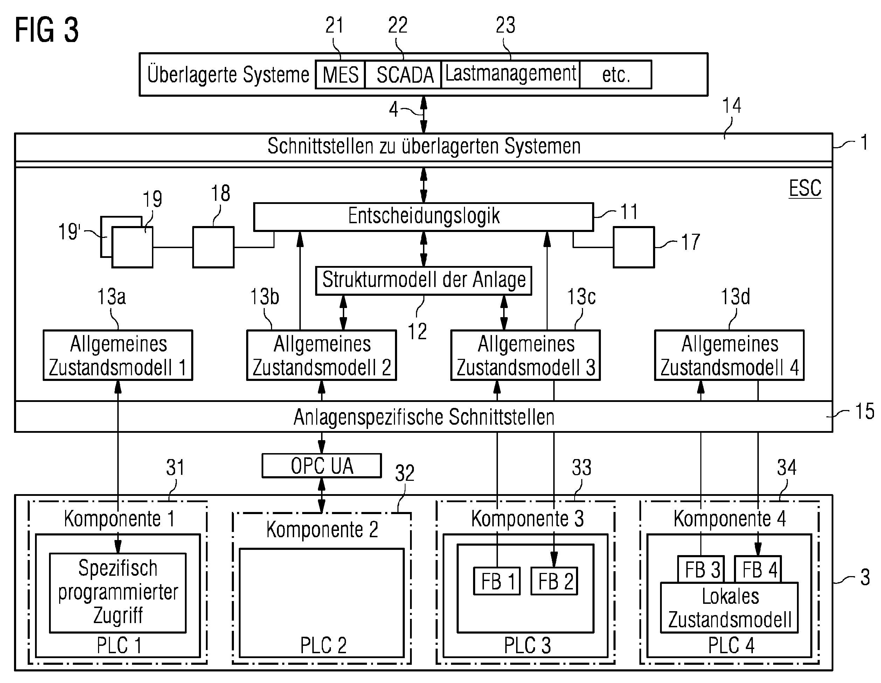

Figur 3 zeigt eine Übersicht über ein beispielhaftes Energiemanagementsystem zur Durchführung des erfindungsgemäßen Verfahrens. Dargestellt sind die generischen Funktionen der eigentlichen Steuerung, Entscheidungslogik, die die Berechnung ihrer Steuerungsbefehle basiert auf dem Aufbau der zu steuernden Anlagen(teile), Strukturmodell der Anlage, und dem oder den Zustandsdefinition der jeweiligen Bestandteile, Allgemeines Zustandsmodell 1-4. Weitere Informationen können vorliegen über Zustandsübergänge, 17, Abhängigkeiten, 18, und weitere Informationen zu den Übergängen, 19, 19'.

In einem Energiemanagementsystem/Energieschaltcontroller können die zeitlichen Verläufe der Energieaufnahme der unterschiedlichen Komponenten einer Anlage definiert und abgespeichert werden. Diese können automatisch ermittelt worden sein oder beispielsweise auch vom Hersteller initial mitgeliefert werden. Zusätzlich können Grenzwerte für bestimmte Parameter, z. B. Lastaufnahme, hinterlegt werden.

Vom Energieschaltcontroller wird eine Einschaltsequenz berechnet, die sowohl die Abhängigkeiten der verschiedenen Komponenten untereinander als auch die summarischen Werte für z.B. die Lastaufnahme berücksichtigt, so dass eine Überschreitung von vorgegebenen Grenzwerten, z.B. maximale Lastaufnahme, verhindert wird. Es wird dabei eine möglichst kurze Schaltsequenz errechnet. Dies ist vorteilhaft, da so das Gesamtsystem der Anlage möglichst lange in einem energiesparenden Stand-By Zustand verbleiben kann und erst kurz vom dem gewünschten Produktivzeitpunkt (also wenn alle Komponenten wieder zur Verfügung stehen müssen) hoch gefahren werden.

Der Energieschaltcontroller ESC, 1, kann durch viele andere Systeme genutzt werden. Hierfür weist er eine geeignete Schnittstelle zu überlagerten Systemen auf, 14.

Ein paar mögliche Beispiele für solche Systeme sind:
- Ein Produktsplanungssystem, 21, und ein MES-System wissen über Pausenzeiten und Betriebsruhen Bescheid. Sie nutzen den Energieschaltcontroller, 1, um für die bekannten Pausen in den energetisch besten Zustand zu schalten und gleichzeitig sicherzustellen, dass die Anlage wieder verfügbar ist, wenn sie wieder benötigt wird.
- Ein Störungsmanagement weiß, dass durch die Störung eines Anlagenteils andere Anlagenteile zurzeit nicht mehr benötigt werden, da sie z. B. keine Teile mehr geliefert bekommen. Nun kann das Störungsmanagement mithilfe des Energieschaltcontrollers diese nicht benötigten Anlagenteile in einen energiesparenden Standby-Zustand schicken. Voraussichtlich muss dabei sichergestellt werden, dass die Anlagenteile in einer bestimmten Zeit "wiedererweckt", also in den Produktivbetrieb zurückgeschaltet werden können.
- Ein Lastmanagementsystem, 23, oder zukünftig auch ein Demand-Response-Controller mit Verbindung zu einem Smart Grid, sollen zur Lastspitzenregelung Teile der Anlage ab- oder in Standby-Zustände schalten können.

Hierzu können diese Systeme zuerst durch den Energieschaltcontroller 1 ermitteln, in welchen Zuständen und mit welcher Leistungsaufnahme die Anlage und ihre Komponenten aktuell laufen. Außerdem kann er ermitteln, in welche Zustände (produktiv oder nicht-produktiv) sich die einzelnen Komponenten schalten lassen. Mit Hilfe von Vorgaben (die natürlich auch die vom Energieschaltcontroller ermittelbaren Abhängigkeiten berücksichtigen) kann das Lastmanagementsystem nun den Energieschaltcontroller auffordern, die Gesamtanlage oder Teile davon in energiesparende Zustände (produktiv oder nichtproduktiv) zu fahren. • Ein Materialführungssystem weiß, dass durch unterschiedliche Geschwindigkeiten und Puffer in der Anlage, oder durch redundante Anlagenteile manche Anlagenteile nur zeitweise verwendet werden. Da es auch weiß, wann und wie lange diese Anlagenteile verwendet werden bzw. nicht verwendet werden, können solche Teile (müssen natürlich als Komponenten im Energieschaltcontroller modelliert sein) über den Energieschaltcontroller für die Zeit der Nichtverwendung in den energetisch günstigsten Zustand geschalten werden. Auch könnten solche Anlagenteile in Teilbetriebszustände, z. B. langsamere Produkten, geschalten werden.

Eine entsprechende Steuerung der betroffenen Anlagen / Anlagenteile / Komponenten 31, 32, 33, 34 erfolgt dann über anlagenspezifische Schnittstellen, 15. Spezifische Anpassungen sind erforderlich. Die Anbindung der Komponenten ist auf verschiedene Art und Weise möglich, beispielhaft sind hier vier verschiedene Möglichkeiten dargestellt:
- mittels spezifischem programmierten Zugriff auf die Komponente PLC1,
- über ein standardisiertes Kommunikationsprotokoll OPC UA
- mit direktem Zugriff - Funktionsblock)
- zusätzlich zum allgemeinen Zustandsmodell kann auch noch ein lokales Zustandsmodell auf der Komponente, PLC4, hinterlegt sein.

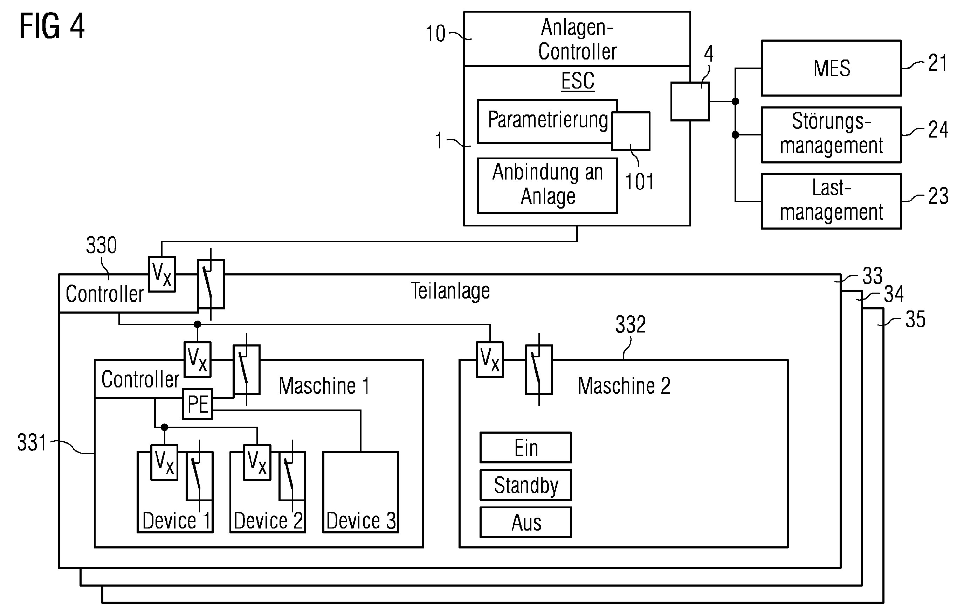

FIG 4 stellt ein beipielhaftes Energiemanagement-System mit Teilanlage dar. Als weiterer Vorteil kann die standardisierte Schnittstelle von Ab-/und Zuschaltfunktion auf Controllerebene (beispielsweise über eine ProfiEnergy Schnittstelle Vx) angesehen werden. Die Parametrierung des Energie-Schalt-Controllers ESC, wie weiter unten beschrieben, führt dazu, dass bei Veränderung der Gegebenheiten in der Anlage das Programm selber nicht oder nur minimal geändert werden muss, sondern lediglich die Parametrierung, also die Definitionen der Modelldefinitionen der Anlage und / oder der Komponenten und oder der Zustände und Zustandsübergänge der Anlage/Anlagenteile. Dort, 101, wird unter anderem das Monitoring und die Parametrierung durchgeführt. Weiterhin wird hier jede Änderung, die beispielsweise bei einem Geräteaustausch erforderlich ist, eingegeben, sowie eine mögliche Handbedienung.

Über die Schnittstelle, 4, kann eine Kommunikation zu den übergeordneten Systemen erfolgen, soweit vorhanden. Beispielsweise zu dem MES 21, bezüglich Pausen, Betriebsruhen und Fertigungsplänen. Das Störungsmanagement 24, und das Lastmanagement 23 zur Abschaltung bei Lastspitzen.

In der einen dargestellten Komponente, Maschine2, ist beispielhaft ein Energiezustandsmodell 332 eingezeichnet. Dieses ist in der Komponente bereits enthalten.

## Patentansprüche

1. Verfahren zur energieeffizienten Steuerung der Einschaltsequenz von Anlagen-Komponenten in einer industriellen Anlage (31, 32, 33, 34), bei dem jede der Anlagen-Komponenten (31, 32, 33, 34), logische Abhängigkeiten zu einer oder mehreren anderen Anlagen-Komponenten aufweisen kann, und bei dem diese Abhängigkeiten bei der Einschalt-Reihenfolge zu beachten sind, wobei
- ein gespeichertes Strukturmodell (12) der zu steuernden Anlage oder des Anlagenteils, bestehend aus von der Anlage umfassten Komponenten (Komponente1, ...),
- zumindest ein gespeichertes Zustandsmodell (13a, ...13d) von zumindest einem in der Anlage oder in dem Anlagenteil umfassten Komponenten (Komponente1, 2, 3, 4),
- mögliche energetische oder funktionale Zustände der Komponenten, sowie mögliche Zustandsübergängen zwischen den einzelnen Komponentenzuständen, und
- gespeicherte Abhängigkeiten zwischen von der Anlage oder dem Anlagenteil umfassten Komponenten (Komponente1, ...) verwendet werden, um anhand des Strukturmodells, dem zumindest einen Zustandsmodell, den möglichen Zuständen der enthaltenen Komponenten und möglichen Zustandsübergängen zwischen den komponenteneigenen Zuständen, den Abhängigkeiten zwischen den Komponenten sowie der Informationen über eine komponentenspezifische Energieaufnahme während des Zeitraums des Einschalt-Vorgangs eine Berechnung einer automatisierten Steuerungsabfolge der einzelnen Anlagenkomponenten (31, 32, 33, 34) gemäß der Vorgaben erfolgt,
wobei zur Erstellung einer Ein- oder Ausschalt-Reihenfolge zu jeder Anlagen-Komponente Informationen über einen komponentenspezifischen Energieaufnahmeverlauf während des Zeitraums des Einschalt-Vorgangs vorbekannt sind und die während der Einschaltsequenz ermittelte Gesamt-Energieaufnahme in der industriellen Anlage immer unterhalb eines zuvor festgelegten Energie-Schwellwerts bleibt.

2. Verfahren nach Patentanspruch 1, **dadurch**
**gekennzeichnet, dass**
der Zeitraum den der ermittelte Einschalt-Vorgang vom Starten der ersten Anlagen-Komponente bis zum Produktiv-Zeitpunkt der Anlage, oder umgekehrt, minimal ist.

3. Verfahren nach einem der Patentansprüche 1 oder 2,
**dadurch gekennzeichnet, dass**
die Informationen über die komponentenspezifische Energieaufnahme während des Zeitraums des Einschalt-Vorgangs bei der Komponente zunächst innerhalb der Anlage ermittelt werden müssen.

4. Vorrichtung zur Erstellung einer Ein- oder Ausschalt-Reihenfolge von Anlagen-Komponenten in einer industriellen Anlage, aufweisend:
- Mitteln zur Speicherung eines Strukturmodells der zu steuernden Anlage oder des Anlagenteils, bestehend aus von der Anlage umfassten Komponenten,
- Mitteln zur Speicherung von zumindest einem Zustandsmodell (Allgemeines Zustandsmodell 1 -4, 13a, ..13d) der in der Anlage oder in dem Anlagenteil umfassten Komponenten,
- Mittel zur Speicherung von tatsächlich den Komponenten zugeordneten energetischen oder funktionalen Zuständen sowie möglichen Zustandsübergängen zwischen den einzelnen Komponentenzuständen,
- Mittel zur Speicherung von Abhängigkeiten zwischen von der Anlage oder dem Anlagenteil umfassten Komponenten, und
- eine Entscheidungslogik zur Auswertung aller gespeicherten Informationen und der Informationen über den komponentenspezifischen Energieaufnahmeverlauf während des Zeitraums des Ein- oder AusschaltVorgangs;
bei der jede der Anlagen-Komponenten logische Abhängigkeiten zu einer oder mehreren anderen Anlagen-Komponenten aufweisen kann, und bei der diese Abhängigkeiten bei der Einschalt-Reihenfolge zu beachten sind, wobei zur Erstellung einer Ein- oder Ausschalt-Reihenfolge zu jeder Anlagen-Komponente Informationen über eine komponentenspezifische Energieaufnahmeverlauf während des Zeitraums des Einschalt-Vorgangs bekannt sind und während des Einschaltvorgangs die Gesamt-Energieaufnahme in der industriellen Anlage immer unterhalb eines zuvor festgelegten Energie-Schwellwerts bleibt

## Claims

1. Method for controlling the switching-on sequence of installation components in an industrial installation (31, 32, 33, 34) in an energy-efficient manner,
in which each of the installation components (31, 32, 33, 34) may have logical dependences on one or more other installation components, and
in which these dependences should be heeded in the switching-on sequence, wherein
- a stored structure model (12) of the installation or installation part to be controlled, consisting of components (component1, ...) included in the installation,
- at least one stored state model (13a, ...13d) of at least one component (component1, 2, 3, 4) included in the installation or installation part,
- possible energy-related or functional states of the components and possible state transitions between the individual component states, and
- stored dependences between components (component1, ...) included in the installation or installation part are used to calculate an automated control sequence of the individual installation components (31, 32, 33, 34) according to the specifications using the structure model, the at least one state model, the possible states of the included components and possible state transitions between the components' own states, the dependences between the components and the information relating to a component-specific energy consumption during the period of the switching-on operation,
wherein,
in order to create a switching-on or switching-off sequence for each installation component, information relating to a component-specific energy consumption profile during the period of the switching-on operation is previously known and the total energy consumption determined during the switching-on sequence in the industrial installation always remains below a previously stipulated energy threshold value.

2. Method according to Patent Claim 1, **characterized in that** the period of the determined switching-on operation from the starting of the first installation component to the production time of the installation, or vice versa, is minimal.

3. Method according to either of Patent Claims 1 and 2, **characterized in that** the information relating to the component-specific energy consumption during the period of the switching-on operation in the component initially has to be determined inside the installation.

4. Apparatus for creating a switching-on or switching-off sequence of installation components in an industrial installation,
having:
- means for storing a structure model of the installation or installation part to be controlled, consisting of components included in the installation,
- means for storing at least one state model (general state model 1-4, 13a, ..13d) of the components included in the installation or installation part,
- means for storing energy-related or functional states actually assigned to the components and possible state transitions between the individual component states,
- means for storing dependences between components included in the installation or installation part, and
- decision logic for evaluating all stored information and the information relating to the component-specific energy consumption profile during the period of the switching-on or switching-off operation,
in which each of the installation components may have logic dependences on one or more other installation components, and in which these dependences should be heeded in the switching-on sequence,
wherein, in order to create a switching-on or switching-off sequence for each installation component, information relating to a component-specific energy consumption profile during the period of the switching-on operation is known, and
the total energy consumption in the industrial installation always remains below a previously stipulated energy threshold value during the switching-on operation.

## Revendications

1. Procédé de commande énergétiquement efficace de la séquence de mise en fonctionnement de composants d'une installation industrielle (31, 32, 33, 34),
dans lequel chacun des composants de l'installation (31, 32, 33, 34) peut présenter des dépendances logiques à l'égard d'un ou plusieurs autres composants de l'installation, et
dans lequel ces dépendances doivent être prises en considération lors de la séquence de mise en fonctionnement, sachant que l'on utilise
- un modèle de structure mémorisé (12) de l'installation à commander ou la partie d'installation, constitué de composants (composant1, ...) compris dans l'installation,
- au moins un modèle d'état mémorisé (13a, ...13d) d'au moins un composant (composant1, 2, 3, 4) compris dans l'installation ou la partie d'installation,
- des états énergétiques ou fonctionnels possibles des composants, ainsi que des transitions d'état possibles entre les différents états des composants, et
- des dépendances mémorisées entre des composants (composant1, ...) compris dans l'installation ou la partie d'installation,
pour calculer à l'aide du modèle de structure, du au moins un modèle d'état, des états possibles des composants contenus et transitions d'état possibles entre les états propres aux composants, des dépendances entre les composants ainsi que des informations sur une absorption d'énergie propre aux composants durant l'intervalle de temps du processus de mise en fonctionnement une succession de commandes automatisées des différents composants de l'installation (31, 32, 33, 34) suivant les consignes,
étant précisé que pour constituer une séquence de mise en fonctionnement ou mise hors fonctionnement,
des informations pour chaque composant de l'installation sur une variation d'absorption d'énergie propre aux composants durant l'intervalle de temps du processus de mise en fonctionnement sont déjà connues et
l'absorption d'énergie globale dans l'installation industrielle, déterminée durant la séquence de mise en fonctionnement, reste toujours inférieure à une valeur seuil d'énergie préétablie.

2. Procédé selon la revendication 1, **caractérisé en ce que** l'intervalle de temps du processus de mise en fonctionnement déterminé, allant du démarrage du premier composant de l'installation jusqu'au moment de production de l'installation ou inversement, est minimal.

3. Procédé selon l'une des revendications 1 ou 2, **caractérisé en ce que**
les informations sur l'absorption d'énergie propre aux composants durant l'intervalle de temps du processus de mise en fonctionnement pour le composant doivent être déterminées d'abord dans l'installation.

4. Dispositif de constitution d'une séquence de mise en fonctionnement ou mise hors fonctionnement de composants dans une installation industrielle,
comprenant :
- des moyens de mémorisation d'un modèle de structure de l'installation à commander ou la partie d'installation, constitué de composants compris dans l'installation,
- des moyens de mémorisation d'au moins un modèle d'état (modèle d'état général 1 - 4, 13a, ... 13d) des composants compris dans l'installation ou la partie d'installation,
- des moyens de mémorisation d'états énergétiques ou fonctionnels réellement associés aux composants ainsi que de transitions d'état possibles entre les différents états des composants,
- des moyens de mémorisation de dépendances entre les composants compris dans l'installation ou la partie d'installation, et
- une logique de décision servant à évaluer toutes les informations mémorisées et les informations sur la variation d'absorption d'énergie propre aux composants durant l'intervalle de temps du processus de mise en fonctionnement ou mise hors fonctionnement,
dans lequel chacun des composants de l'installation peut présenter des dépendances logiques à l'égard d'un ou plusieurs autres composants de l'installation, et
dans lequel ces dépendances doivent être prises en considération lors de la séquence de mise en fonctionnement,
étant précisé que pour constituer une séquence de mise en fonctionnement ou mise hors fonctionnement,
des informations pour chaque composant de l'installation sur une variation d'absorption d'énergie propre aux composants durant le processus de mise en fonctionnement sont connues et
durant le processus de mise en fonctionnement, l'absorption d'énergie globale dans l'installation industrielle reste toujours inférieure à une valeur seuil d'énergie préétablie.
